# EUROPEAN PATENT SPECIFICATION

(11) **EP 2 221 343 B1**
(45) Date of publication and mention of the grant of the patent: **10.08.2016**
(21) Application number: 08848557.8
(22) Date of filing: 07.11.2008
(51) Int. Cl.: C08L 83/07, C08K 3/00, C08L 83/05, C08L 83/04

(54) **THERMOCURABLE SILICONE RUBBER COMPOSITION**
WÄRMEHÄRTBARE SILIKONKAUTSCHUKZUSAMMENSETZUNG
COMPOSITION DE CAOUTCHOUC SILICONE THERMODURCISSABLE

(30) Priority: 09.11.2007 JP 2007291733
(43) Date of publication of application: 25.08.2010
(73) Proprietor: Momentive Performance Materials Japan LLC, Tokyo 107-6112 (JP)
(72) Inventor: OTASHIRO, Koki, Tokyo 107-6112 (JP)
(74) Representative: Diehl & Partner GbR
(86) International application number: PCT/JP2008/003221
(87) International publication number: WO 2009/060616

(56) References cited:
- JP-A- 2001 051 538
- JP-A- 2005 068 273
- JP-A- 2006 052 302
- JP-A- 2008 101 056
- US-A1- 2007 219 312
- DATABASE WPI Week 200527 Thomson Scientific, London, GB; AN 2005-256284 XP002665627, -& JP 2005 068273 A (TOSHIBA SILICONE KK) 17 March 2005 (2005-03-17)
- SAWADA M: "Manufacture of polyorgano siloxane composition for rubber molded product, involves mixing specific polyorgano hydrogen siloxane with crosslinked material of polyorgano siloxane having alkenyl group, and polyorgano hydrogen siloxane", WPI / THOMSON,, vol. 2005, no. 27, 17 March 2005 (2005-03-17), XP002665627,

## Description

### Technical Field

The present invention relates to a heat curable silicone rubber composition which inhibits precipitation of an inorganic filler and exhibits a good stability.

### Background Art

Conventionally, it is possible to impart thermal and electric conductivities to silicone rubbers by adding various kinds of inorganic fillers, and thus silicone rubbers are widely used as a variety of rolls and electric conductive materials.

In order to improve various performances of silicone rubbers used in such applications, modifications of organopolysiloxane as a base polymer have been made and reported.

For example, JP-A 2001-51538 proposed the use of an organopolysiloxane with a particular dispersion degree for improving adhesion to fluororesin, and JP-A 2006-52302 proposed a silicone rubber composition with stable electric conductivity and a small compression set obtained by using two types of organopolysiloxane with different degrees of polymerization.

Meanwhile, these types of silicone rubber composition have a problem of aging stability. In other words, when silicone rubber compositions are used as various rolls and electric conductive materials, relatively large amounts of inorganic fillers are often blended in view of hardness and electric conductivity. These inorganic fillers may sometimes precipitate during storage and fail to offer intended physical properties.

This problem has not been solved in compositions of JP-A 2001-51538 and JP-A 2006-52302 described above.
Document JP 2005-068273 A discloses a polyorganosiloxane composition having a low rigidity and a high impact resilience. The composition comprises an organopolysiloxane containing an alkenyl group bonded to two silicon atoms, the degree of polymerization being 7000; another organo-polysiloxane wherein one alkenyl group bonded to silicon atoms is present on average per molecule; and an organohydrogen polysiloxane containing two terminal hydrosilyl groups, the degree of polymerization being 20.

### Disclosure of the Invention

The present invention was made in the light of the circumstances as described above, and it is an object of the invention to provide a heat curable silicone rubber composition which may inhibit precipitation of an inorganic filler upon storage and offer a good stability.

The present inventor has conducted detail studies for achieving the above object. As a result, they have found that the use of, as base polymer organopolysiloxane, the one containing an alkenyl group bonded to at least two silicon atoms in a molecule and the one containing an alkenyl group bonded to less than two silicon atoms in a molecule in combination is extremely effective, and have completed the present invention.

Namely, the present invention is a heat curable silicone rubber composition, being in a liquid state at room temperature, containing:
(A) 20 to 80 parts by mass of organopolysiloxane containing analkenyl group bonded to at least two silicon atoms in amolecule,
(B) 20 to 80 parts by mass of organopolysiloxane wherein 0.1 or more and less than two alkenyl groups bonded to silicon atoms are present in a molecule on average, the remaining organic groups bonded to silicon atoms are substituted or unsubstituted monovalent hydrocarbon groups not containing an aliphatic unsaturated bond, and a viscosity thereof at 23°C is 0.05 to 100 Pa·s,
the total amount of Components (A) and (B) being 100 parts by mass,
(C) organohydrogen polysiloxane containing hydrogen atoms bonded to at least two silicon atoms in a molecule, the amount of hydrogen atoms bonded to silicon atoms in Component (C) being 0.1 to 10 mol relative to 1 mol of alkenyl groups in Components (A) and (B),
(D) 5 to 500 parts by mass of an inorganic filler, and
(E) a catalytic amount of an addition reaction catalyst.

characterized by a viscosity according to claim 1.

The heat curable silicone rubber composition of the present invention may inhibit precipitation of an inorganic filler upon storage and offer a good stability, thereby being preferably used as various rolls and electric conductive materials.

As the organopolysiloxane containing an alkenyl group bonded to at least two silicon atoms in a molecule of Component (A), those having the following average composition formula (1) can be used.

RₐSiO_{(4-a)/2} (1)

(wherein, R's are unsubstituted or substituted monovalent hydrocarbon groups having 1 to 10 carbon atoms, preferably 1 to 8 carbon atoms, which may be the same as or different from each other, and a is a positive number in the range from 1.5 to 2.8, preferably 1.8 to 2.5, and more preferably 1.95 to 2.05.)

Here, unsubstituted or substituted monovalent hydrocarbon groups bonded to silicon atoms represented by R described above include the following: alkyl groups such as methyl, ethyl, propyl, isopropyl, butyl, isobutyl, tert-butyl, pentyl, neopentyl, hexyl, cyclohexyl, octyl, nonyl or decyl groups; aryl groups such as phenyl, tolyl, xylyl or naphthyl groups; aralkyl groups such as benzyl, phenylethyl or phenylpropyl groups; alkenyl groups such as vinyl, allyl, propenyl, isopropenyl, butenyl, hexenyl, cyclohexenyl or octenyl groups; those wherein hydrogen atoms of these groups are substituted in part or in whole by halogen atoms such as fluorine, bromine or chlorine or cyano group, for example, chloromethyl, chloropropyl, bromoethyl, trifluoropropyl and cyanoethyl groups, and 90% or more of total R is preferably methyl group.

Further, at least two (usually 2 to 50), preferably 2 to 20 and more preferably 2 to 10 of Rs need to be alkenyl group (preferably the one having 2 to 8 carbon atoms, further preferably the one having 2 to 6 carbon atoms and more preferably vinyl group).

Meanwhile, this alkenyl group may be bonded to a silicon atom at the terminal of the molecular chain or a silicon atom in the middle of the molecular chain, or to the both.

The structure of the organopolysiloxane of the present invention is composed basically of a repeating diorganosiloxane unit represented by R₂SiO as a main chain and preferably has a straight-chain structure wherein both terminals of the molecular chain are sequestered by triorganosiloxy group represented by R₃SiO_{1/2}, but the structure may be branched or cyclic in part.

Meanwhile, in the present invention, two or more types of organopolysiloxanes with different degrees of polymerization are preferably used in combination as Component (A) for the purpose of adjusting viscosity.

Specifically, the blending of an organopolysiloxane gum having a degree of polymerization preferably exceeding 2000, more preferably exceeding 3000, is desirable. The organopolysiloxane constituting Component (A) is composed of 10 to 40 parts by weight of this polysiloxane gum (the remaining polyorganosiloxane is composed of 40 to 70 parts by weight) and preferably 10 to 30 parts by weight (the remaining is composed of 50 to 70 parts by weight), but not limited in particular.

Next, Component (B) of the present invention is an organopolysiloxane wherein 0.1 or more and less than two alkenyl groupsbonded to silicon atoms are present in amoleculeon average, the remaining organic groups bonded to silicon atoms being substituted or unsubstituted monovalent hydrocarbon groups which do not contain an aliphatic unsaturated bond, and its viscosity at 23°C being 0.05 to 100 Pa·s.

Preferably alkenyl group is vinyl group.

Further, the remaining organic groups except alkenyl are substituted or unsubstituted monovalent hydrocarbon groups not containing an aliphatic unsaturated group and the examples specifically include alkyl groups such as methyl, ethyl, propyl, isopropyl, butyl, isobutyl, tert-butyl, pentyl, neopentyl, hexyl, cyclohexyl, octyl, nonyl or decyl groups; aryl groups such as phenyl, tolyl, xylyl or naphthyl groups; aralkyl groups such as benzyl, phenylethyl or phenylpropyl groups; and substituted hydrocarbons such as chloromethyl, cyanoethyl or 3,3,3-trifluoropropyl groups. Methyl group is preferred due to the ease of synthesis and handling. Viscosity at 23°C is selected from within the range of 0.05 to 100 Pa·s and preferably 0.1 to 5 Pa·s. Though the siloxane skeleton of polyorganosiloxane (B) may be either straight or branched or the mixture of both, the straight chain structure is preferred due to the ease of synthesis. Though the alkenyl group bonded to silicon atoms may bind to silicon atoms either in the middle of the molecule or at terminals, considering reaction rate or the like, being bonded to silicon atoms at terminals is preferred. Such polyorganosiloxane (B) can be synthesized by, for example, blending an alkenyl group-containing polyorganosiloxane which contains an alkenyl group binding to silicon atoms at both terminals, a straight or branched polyorganosiloxane which does not contain an alkenyl group, and if necessary, a polyorganosiloxane which does not contain an alkenyl group, so as to satisfy average molecular weights which can achieve the viscosity range described above and the alkenyl groups, and then cleaving the siloxane under the presence of an acid catalyst such as sulfuric acid, hydrochloric acid or activated clay, or an alkaline catalyst such as potassium hydroxide or tetramethylammonium hydroxide through a routine method and equilibrating thereof. In this case, cyclic polysiloxane, in particular a cyclic polysiloxane not containing an alkenyl group may be used in combination as a part of raw material. After equilibration, by-produced or unreacted low-molecular-weight polyorganosiloxane is removed and purified by removing the catalyst through a routine method and heating under a reduced pressure.

A feature of the present invention is to blend structurally different organopolysiloxanes at a particular ratio, and the blending ratio of Components (A) and (B) is such that Component (A) is contained from 20 to 80 parts by mass relative to the total amount of Components (A) and (B) (100 parts by mass). When the ratio is outside this range, for example, Component (A) is contained less than 20 parts by mass (namely, Component (B) is contained 80 parts by mass or more) or only one type of polyorganosiloxane is used, sufficient effects can not be obtained.

Next, the organopolysiloxane of Component (C) is a cross-linking agent for the present composition and contains hydrogen atoms bonded to at least two silicon atoms in a molecule. The binding positions of hydrogen atoms binding to silicon atoms in Component (C) are not limited in particular and may be at the terminals of the molecular chain and/or on the side chain of the molecular chain, for example. Specifically, examples of the organic groups in Component (C) include alkyl groups such as methyl, ethyl, propyl, butyl, pentyl, hexyl or heptyl groups; aryl groups such as phenyl, tolyl, xylyl or naphthyl groups; aralkyl groups such as benzyl or phenethyl groups; halo-substituted alkyl groups such as chloromethyl, 3-chloropropyl or 3, 3, 3-trifluoropropyl groups, wherein methyl and phenyl groups are preferred. Further, the molecular structure of Component (C) is not limited in particular and may be, for example, liner, branched, cyclic, net and partially branched liner, and preferably liner.

The viscosity of Component (C) is not limited in particular, and its viscosity at 23°C is preferably within the range of 0. 005 and 10 Pa·s, and more preferably within the range of 0.01 and 1 Pa·s. This is because if the viscosity of Component (C) at 23°C is less than 0.005 Pa·s, physical properties of the resulting cured coating, in particular flexibility and elasticity may be reduced, and if this viscosity is greater than 10 Pa-s, the viscosity of the resulting composition may be increased, which makes its handling and workability poorer. The blending amount of Component (C) is required to be such that the amount of the hydrogen atoms bonded to silicon atoms in Component (C) is within the range of 0.1 to 10 mole, and preferably within the range of 0.5 to 5 mole relative to 1 mol of alkenyl groups in Components (A) and (B) . This is because if the blending amount of Component (C) is such that the amount of the hydrogen atoms bonded to silicon atoms in Component (C) is less than 0.1 mole relative to 1 mole of alkenyl groups in Components (A) and (B), the remaining alkenyl groups in Components (A) and (B) may cause lower heat resistance. Furthermore, if this amount is greater than 10 moles, the hardness of the resulting cured coating may be prone to change over time, and also the cured coating may be cracked or swelled upon thermal shock or under high temperature.

The inorganic filler of Component (D) is not limited in particular, and various inorganic fillers can be used, and the especially preferred are one or two or more selected from powder quartz; metal oxides such as aluminum oxide; and carbon black.

The blending amount of the inorganic filler of Component (D) is, depending on the type, within the range of 5 to 500 parts by mass relative to 100 parts by mass of the total amount of Components (A) and (B).

This range is preferred because the amount is effective in exerting effects on electric or thermal conductivity. Further, the filler may contain, but is not limited inparticular, one kind, or two or more fillers may be blended.

Further, as an optional component from well known technology, iron oxide (red oxide) known as a heat-resistant additive, or aerosol silica known as a reinforcing filling material, may be blended if within the range not interfering with the effects of the present invention.

Next, the addition reaction catalysts of Component (E) include the following: platinum black, platinum chloride, chloroplatinic acid, reaction products of chloroplatinic acid and monovalent alcohols, complexes of chloroplatinic acid and olefins, platinum bis(acetoacetate), and platinum group metal catalysts such as palladium-based or rhodium-based catalysts. Meanwhile, the blending amount of this addition reaction catalyst can be a catalytic amount and, usually, 0.5 to 1000 ppm, more preferably 1 to 500 ppm of the catalyst is blended as a metal component relative to the total mass of Components (A) and (B) .

To the silicone rubber composition of the present invention, low-molecular-weight siloxane esters; silanol; dispersants such as diphenylsilanediol; acetylene alcohols such as ethynylcyclohexanol; cyclic vinylsiloxanes such as tetravinyltetramethylcyclotetrasiloxane; reaction control agents including triazole compounds such as benzotriazole; halogen compounds which imparts flame retardancy may be mixed as necessary within a range not damaging the object of the present invention.

Viscosity of the silicone rubber composition of the present invention at room temperature (at 23°C) is preferably within the range of 30 to 1000 Pa·s, and more preferably 50 to 800 Pa·s. Significant filler precipitation is observed at a viscosity of less than 30 Pa·s, and molding pressure may become too large at a viscosity exceeding 1000 Pa·s, which may make the volume resistivity unstable. Meanwhile, in the present invention, viscosity can be measured by a rotational viscometer such as BH-type and BS-type.

### Examples

In the following, although the present invention will be explained in detail referring to Examples and Comparative Examples, the present invention is not limited by the Examples below. Meanwhile, each "part" in the following Examples indicates "part by mass."

Hardness was determined according to JISK6249 using JISA durometer.

Density was determined according to JISK6249.

Viscosity was determined by using TYPE B rotational viscometer and as an apparent viscosity.

Determinations after time as a storage stability were conducted in the same way as above by collecting the supernatant of the obtained composition from a storage container.

### Example 1

30 parts of dimethylpolysiloxane gum whose both terminals were sequestered by trimethylsiloxy group and having vinyl group in the side chain (the degree of polymerization of 8,000, containing 0.08 mmol/g vinyl group), 70 parts of mono(vinyl group)-containing polysiloxane whose both terminals were sequestered by trimethylsiloxy group and having vinyl group in the side chain (having a viscosity of approximately 1000 cP , containing 0.05 mmol/g vinyl group) and 50 parts of powder quartz (Crystalite VX-S produced by Tatsumori Kogyo) were put into a planetary mixer, kept stirring for 30 minutes, and then passed through a three-roll mill once. After that, 4 parts of methyl hydrogen polysiloxane having Si-H group at both terminals and in the side chain (the degree of polymerization of 17, Si-H amount of 6.0 mmol/g) as a cross-linking agent, 0.1 part of ethynylcyclohexanol as a reaction control agent, 0.1 part of platinum catalyst (Pt concentration of 1%) were added and kept stirring for 15 minutes to obtain a silicone rubber composition. Viscosity of this composition at room temperature (25°C) was measured by using BH-type viscometer and rotor No. 7 under 10 rpm condition. Hardness and density were also measured. Further, after storing this composition for 6 months at room temperature, the viscosity, hardness and density of this composition were measured. The results are shown in Table 1.

### Example 2

75 parts of dimethylpolysiloxane whose both terminals were sequestered by trimethylsiloxy group and having vinyl group in the side chain (having a viscosity of approximately 1000 cP, containing 0.1 mmol/g vinyl group), 5 parts of dimethylpolysiloxane gum whose both terminals were sequestered by trimethylsiloxy group and having vinyl group in the side chain (the degree of polymerization of 8,000, containing 0.08 mmol/g vinyl group), 20 parts of mono(vinyl group)-containing polysiloxane whose both terminals were sequestered by trimethylsiloxy group and having vinyl group in the side chain (having a viscosity of approximately 1000 cP, containing 0.05 mmol/g vinyl group) and 200 parts of zinc oxide (zinc oxide JIS grade 2 produced by HakusuiTech) were put into a planetary mixer, kept stirring for 30 minutes, and then passed through a three-roll mill once. After that, 7 parts of methyl hydrogen polysiloxane having Si-H group at both terminals and in the side chain (the degree of polymerization of 17, Si-H amount of 6.0 mmol/g) as a cross-linking agent, 0.1 part of ethynylcyclohexanol as a reaction control agent and 0.1 part of platinum catalyst (Pt concentration of 1%) were added and kept stirring for 15 minutes to obtain a silicone rubber composition, and were then determined in the same manner as in Example 1.

### Example 3

20 parts of dimethylpolysiloxane gum whose both terminals were sequestered by trimethylsiloxy group and having vinyl group in the side chain (the degree of polymerization of 8,000, containing 0.08 mmol/g vinyl group), 80 parts of mono(vinyl group)-containing polysiloxane whose both terminals were sequestered by trimethylsiloxy group and having vinyl group in the side chain (having a viscosity of approximately 1000 cP , containing 0. 05 mmol/g vinyl group) and 25 parts of carbon black (DENKA BLACK^{™} granule produced by Denki Kagaku Kogyo) were put into a planetary mixer, kept stirring for 30 minutes, and then passed through a three-roll mill once. After that, 5 parts of methyl hydrogen polysiloxane having Si-H group at both terminals and in the side chain (the degree of polymerization of 17, Si-H amount of 6.0 mmol/g) as a cross-linking agent, 0.1 part of ethynylcyclohexanol as a reaction control agent and 0.1 part of platinum catalyst (Pt concentration of 1%) were added and kept stirring for 15 minutes to obtain a silicone rubber composition, and were then determined in the same manner as in Example 1.

### Comparative Examples 1 to 3

As shown in Table 1, compositions having the same composition as those of Examples 1 to 3 were obtained except for not blending mono(vinyl group)-containing polysiloxane and measured in the same manner as in Example 1.

**Table 1**

| | Examples | | | Comparative Examples | | |
|---|---|---|---|---|---|---|
| | 1 | 2 | 3 | 1 | 2 | 3 |
| (A) Vinyl group-containing polysiloxane having a viscosity of approximately 1000 cP | | 75 | | 70 | 85 | 80 |
| (A) vinyl group-containing polysiloxane num | 30 | 5 | 20 | 30 | 5 | 20 |
| (B) Mono(vinyl group)-containing polysiloxane having a viscosity of approximately 1000 cP | 70 | 20 | 80 | | | |
| (D) Powder quartz (Crystalite VX-S produced by Tatsumori Kogyo) | 50 | | | 50 | | |
| (D) Carbon: DENKA BLACK granule produced by Denki Kagaku Kogyo | | | 25 | | | 25 |
| (D) Zinc oxide: zinc oxide JIS grade 2 produced by HakusuiTech | | 200 | | | 200 | |
| (E) Platinum solution | 0.1 | 0.1 | 0.1 | 0.1 | 0.1 | 0.1 |
| Ethynylcyclohexanol | 0.1 | 0.1 | 0.1 | 0.1 | 0.1 | 0.1 |
| (C) Hydrogen group-containing polysiloxane | 5 | 5 | 5 | 5 | 5 | 5 |
| Hardness, JISA | 9 | 30 | 40 | 15 | 35 | 50 |
| Density | 1.25 | 1.9 | 1.15 | 1.25 | 1.9 | 1.15 |
| Viscosity, Pas | 100 | 150 | 500 | 110 | 150 | 500 |
| After 6 months | | | | | | |
| Hardness, JISA | 9 | 30 | 40 | 11 | 30 | 47 |
| Density | 1.25 | 1.89 | 1.15 | 1.17 | 1.78 | 1.11 |
| Viscosity, Pas | 100 | 148 | 500 | 80 | 130 | 470 |

## Claims

1. A silicone composition which is heat curable to form a rubber, comprising:
(A) 20 to 80 parts by mass of an organopolysiloxane containing at least two alkenyl groups bonded to silicon atoms in a molecule;
(B) 20 to 80 parts by mass of an organopolysiloxane wherein 0.1 or more and less than two alkenyl groups bonded to silicon atoms are present in a molecule on average, the remaining organic groups bonded to silicon atoms being substituted or unsubstituted monovalent hydrocarbon groups not containing an aliphatic unsaturated bond, and a viscosity thereof at 23°C is 0.05 to 100 Pa·s;
the total amount of Component (A) and (B) being 100 parts by mass;
(C) organohydrogen polysiloxane containing hydrogen atoms bonded to at least two silicon atoms in a molecule, the amount of hydrogen atoms bonded to silicon atoms in Component (C) being 0.1 to 10 mol relative to 1 mol of alkenyl groups in Components (A) and (B);
(D) 5 to 500 parts by mass of an inorganic filler; and
(E) a catalytic amount of an addition reaction catalyst
**characterized by**
the composition being liquid at room temperature, having a viscosity in the range of 30 to 1000 Pa·s at 23°C, as measured by a rotational viscometer.

2. The heat curable silicone rubber composition according to Claim 1, wherein the inorganic filler (D) is one or two or more selected from the group consisting of powder quartz, metal oxides and carbon black.

3. The composition according to claim 1 or 2, wherein the organopolysiloxane of component (A) has the following average composition formula (1):
RₐSiO_{(4-a)/2} (1),
wherein each "R" is an unsubstituted or substituted monovalent hydrocarbon group having 1 to 10 carbon atoms, which may be the same as or different from each other, and "a" is a positive number in the range from 1.5 to 2.8.

4. The composition according to claim 3, wherein the unsubstituted or substituted monovalent hydrocarbon group has 1 to 8 carbon atoms, which may be the same as or different from each other.

5. The composition according to claim 3 or 4, wherein "a" is a positive number in the range from 1.8 to 2.5.

6. The composition according to claim 5, wherein "a" is a positive number in the range from 1.95 to 2.05.

7. The composition according to one of claims 3 to 6, wherein at least two of the "R"s are alkenyl groups having 2 to 8 carbon atoms.

8. The composition according to claim 7, wherein at least two of the "R"s are vinyl groups.

9. The composition according to claim 1 or 2, wherein the organopolysiloxane of component (A) comprises two or more organopolysiloxanes having polymerization degrees different from each other.

10. The composition according to claim 1 or 2, wherein the organopolysiloxane of component (A) comprises an organopolysiloxane gum having a polymerization degree exceeding 2000.

11. The composition according to claim 10, wherein the organopolysiloxane of component (A) is contained in the amount of 40 to 70 parts by weight, wherein the organopolysiloxane gum having the polymerization degree exceeding 2000 is contained in the amount of 10 to 40 parts by weight.

12. The composition according to claim 1 or 2, wherein the organopolysiloxane of component (B) has a viscosity at 23°C of 0.1 to 5 Pa·s.

13. The composition according to claim 1 or 2, wherein the inorganic filler of component (D) is selected from powder quartz, aluminum oxide and carbon black.

14. The composition according to claim 13, wherein the inorganic filler of component (D) comprises aluminum oxide.

15. The composition according to one of claims 1 to 14, wherein the viscosity of the composition is 50 to 800 Pa·s at 23°C.

16. Use of the composition according to one of claims 1 to 15 for rolls or electrically conductive materials.

## Patentansprüche

1. Silikonzusaminensetzung, die zur Bildung eines Kautschuks wärmevernetzbar ist, beinhaltend:
(A) 20 bis 80 Massenanteile eines Organopolysiloxans mit mindestens zwei an Siliziumatome in einem Molekül gebundenen Alkenylgruppen;
(B) 20 bis 80 Massenanteile eines Organopolysiloxans, bei dem im Durchschnitt 0,1 oder mehr und weniger als zwei an Siliziumatome in einem Molekül gebundene Alkenylgruppen vorhanden sind, wobei die übrigen an Siliziumatome gebundenen organischen Gruppen substituierte oder unsubstituierte monovalente Kohlenwasserstoffgruppen ohne aliphatische ungesättigte Bindungen sind, und dessen Viskosität bei 23°C 0,05 bis 100 Pa·s beträgt;
wobei der Gesamtmenge von Komponente (A) und (B) 100 Massenanteile beträgt;
(C) Organohydrogenpolysiloxan mit an mindestens zwei Siliziumatome in einem Molekül gebundenen Wasserstoffatomen, wobei die Menge an an Siliziumatomen gebundenen Wasserstoffatomen in Komponente (C) 0,1 bis 10 mol in Bezug auf 1 mol Alkenylgruppen in den Komponenten (A) und (B) beträgt;
(D) 5 bis 500 Massenanteile eines anorganischen Füllstoffs; und
(E) einer katalytischen Menge eines Additionsreaktionskatalysators,
**dadurch gekennzeichnet, dass**
die Zusammensetzung bei Raumtemperatur flüssig ist, und eine mit einem Rotationsviskometer gemessene Viskosität im Bereich 30 bis 1000 Pa·s bei 23°C aufweist.

2. Wärmevernetzbare Silikonkautschukzusammensetzung gemäß Anspruch 1, wobei der anorganische Füllstoff (D) eines oder zwei oder mehr ausgewählt aus der Gruppe umfassend Quarzpulver, Metalloxide und Karbonschwarz ist.

3. Zusammensetzung gemäß Anspruch 1 oder 2, wobei das Organopolysiloxan von Komponente (A) die folgende durchschnittliche Zusammensetzungsformel (1) aufweist:
RₐSiO_{(4-a)/2} (1),
wobei jedes "R" eine unsubstituierte oder substituierte monovalente Kohlenwasserstoffgruppe mit 1 bis 10 Kohlenstoffatomen ist, die gleich oder voneinander verschieden sein können, und "a" eine positive Zahl im Bereich von 1,5 bis 2,8 ist.

4. Zusammensetzung gemäß Anspruch 3, wobei die unsubstituierte oder substituierte monovalente Kohlenwasserstoffgruppe 1 bis 8 Kohlenstoffatome aufweist, die gleich oder voneinander verschieden sein können.

5. Zusammensetzung gemäß Anspruch 3 oder 4, wobei "a" eine positive Zahl im Bereich von 1,8 bis 2,5 ist.

6. Zusammensetzung gemäß Anspruch 5, wobei "a" eine positive Zahl im Bereich von 1,95 bis 2,05 ist.

7. Zusammensetzung gemäß einem der Ansprüche 3 bis 6, wobei wenigstens zwei der "R"s Alkenylgruppen mit 2 bis 8 Kohlenstoffatomen sind.

8. Zusammensetzung gemäß Anspruch 7, wobei wenigstens zwei der "R"s Vinyl- gruppen sind.

9. Zusammensetzung gemäß Anspruch 1 oder 2, wobei das Organopolysiloxan von Komponente (A) zwei oder mehr Organopolysiloxane mit voneinander verschiedenen Polymerisationsgraden aufweist.

10. Zusammensetzung gemäß Anspruch 1 oder 2, wobei das Organopolysiloxan von Komponente (A) ein Organopolysiloxangummi mit einem 2000 übersteigenden Polymerisationsgrad aufweist.

11. Zusammensetzung gemäß Anspruch 10, wobei das Organopolysiloxan von Komponente (A) in einer Menge von 40 bis 70 Gewichtsanteilen enthalten ist, wobei der Organopolysiloxangummi mit dem 2000 übersteigenden Polymerisationsgrad in einer Menge von 10 bis 40 Gewichtsanteilen enthalten ist.

12. Zusammensetzung gemäß Anspruch 1 oder 2, wobei das Organopolysiloxan von Komponente (B) eine Viskosität bei 23°C von 0,1 bis 5 Pa·s aufweist.

13. Zusammensetzung gemäß Anspruch 1 oder 2, wobei der anorganische Füllstoff von Komponente (D) ausgewählt ist aus Quarzpulver, Aluminiumoxid und Karbonschwarz.

14. Zusammensetzung gemäß Anspruch 13, wobei der anorganische Füllstoff von Komponente (D) Aluminiumoxid beinhaltet.

15. Zusammensetzung gemäß einem der Ansprüche 1 bis 14, wobei die Viskosität der Zusammensetzung 50 bis 800 Pa·s bei 23°C beträgt.

16. Verwendung der Zusammensetzung gemäß einem der Ansprüche 1 bis 15 für Walzen oder elektrisch leitfähige Materialien.

## Revendications

1. Composition de silicone qui est thermodurcissable pour former un caoutchouc, comprenant :
(A) de 20 à 80 parties en masse d'un organopolysiloxane contenant au moins deux groupes alcényle liés à des atomes de silicium dans une molécule ;
(B) de 20 à 80 parties en masse d'un organopolysiloxane dans laquelle 0,1 ou plus et moins de deux groupes alcényle liés à des atomes de silicium sont présents dans une molécule en moyenne, les groupes organiques restants liés à des atomes de silicium étant des groupes hydrocarbure monovalents substitués ou non substitués ne contenant pas de liaison aliphatique insaturée, et ayant une viscosité de 0,05 à 100 Pa.s à 23 °C ;
la quantité totale des composants (A) et (B) étant de 100 parties en masse ;
(C) un organohydrogéno polysiloxane contenant des atomes d'hydrogène liés à aux moins deux atomes de silicium dans une molécule, la quantité d'atome d'hydrogène liés à des atomes de silicium dans le composant (C) étant de 0,1 à 10 moles pour 1 mole de groupes alcényle dans les composants (A) et (B) ;
(D) de 5 à 500 parties en masse d'une charge inorganique ; et
(E) une quantité catalytique d'un catalyseur de réaction d'addition
**caractérisé en ce que**
la composition est liquide à température ambiante, a une viscosité dans la plage de 30 à 1 000 Pa.s à 23 °C, telle que mesurée par un viscosimètre rotatif.

2. Composition de caoutchouc de silicone thermodurcissable selon la revendication 1, dans laquelle la charge inorganique (D) est un ou deux éléments ou plus sélectionnés dans le groupe constitué de poudre de quartz, d'oxyde de métaux et de noir de carbone.

3. Composition selon la revendication 1 ou 2, dans laquelle l'organopolysiloxane du composant (A) a la formule compositionnelle moyenne (1) suivante :
RaSiO_{(4-a)/2} (1)
dans laquelle chaque « R » est un groupe hydrocarbure monovalent non substitué ou substitué ayant de 1 à 10 atomes de carbone, qui peuvent être identiques ou différents les uns des autres, et « a » est un nombre positif dans la plage de 1,5 à 2,8.

4. Composition selon la revendication 3, dans laquelle le groupe hydrocarbure monovalent non substitué ou substitué a de 1 à 8 atomes de carbones, qui peuvent être identiques ou différents les uns des autres.

5. Composition selon la revendication 3 ou 4, dans laquelle « a » est un nombre positif dans la plage de 1,8 à 2,5.

6. Composition selon la revendication 5, dans laquelle « a » est un nombre positif dans la plage de 1,95 à 2,05.

7. Composition selon l'une quelconque des revendications 3 à 6, dans laquelle au moins deux des « R » sont des groupes alcényle ayant de 2 à 8 atomes de carbone.

8. Composition selon la revendication 7, dans laquelle au moins deux des « R » sont des groupes vinyle.

9. Composition selon la revendication 1 ou 2, dans laquelle l'organopolysiloxane du composant (A) comprend deux organopolysiloxanes ou plus ayant des degrés de polymérisation différents l'un de l'autre.

10. Composition selon la revendication 1 ou 2, dans laquelle l'organopolysiloxane du composant (A) comprend une gomme d'organopolysiloxane ayant un degré de polymérisation supérieur à 2 000.

11. Composition selon la revendication 10, dans laquelle l'organopolysiloxane du composant (A) est contenu en une quantité de 40 à 70 parties en poids, dans laquelle la gomme d'organopolysiloxane ayant le degré de polymérisation supérieur à 2 000 est contenue en la quantité de 10 à 40 parties en poids.

12. Composition selon la revendication 1 ou 2, dans laquelle l'ôrganopolysiloxane du composant (B) a une viscosité à 23 °C de 0,1 à 5 Pa.s.

13. Composition selon la revendication 1 ou 2, dans laquelle la charge inorganique du composant (D) est sélectionnée parmi la poudre de quartz, l'oxyde d'aluminium et le noir de carbone.

14. Composition selon la revendication 13, dans laquelle la charge inorganique du composant (D) comprend de l'oxyde d'aluminium.

15. Composition selon l'une quelconque des revendications 1 à 14, dans laquelle la viscosité de la composition est de 50 à 800 Pa.s à 23 °C.

16. Utilisation de la composition selon l'une quelconque des revendications 1 à 15 pour des rouleaux ou des matériaux électroconducteurs.
